# EUROPEAN PATENT APPLICATION

(11) **EP 4 287 738 A1**
(43) Date of publication of application: **06.12.2023**
(21) Application number: 22746066.4
(22) Date of filing: 31.01.2022
(51) Int. Cl.: H04W 72/04, H04W 72/12, H04W 28/04, H04W 74/08

(54) **TERMINAL, WIRELESS COMMUNICATION METHOD, AND BASE STATION**

(30) Priority: 01.02.2021 JP 2021014610
(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/003541
(87) International publication number: WO 2022/163847

(57) **Abstract**

To appropriately transmit a pathloss RS. A terminal according to an aspect of the present disclosure includes a transmitting section that transmits an uplink shared channel, based on a UL transmission indication included in a random access response, and a control section that controls, in a case of re-transmitting the uplink shared channel, transmission of a pathloss reference signal, based on at least one of a certain condition and information notified from a base station.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In an existing LTE system (for example, 3GPP Rel. 8 to Rel. 14), a user terminal (UE: User Equipment) controls reception of a downlink shared channel (for example, PDSCH: Physical Downlink Shared Channel) based on downlink control information (DCI; also referred to as DL assignment or the like) from a base station. The user terminal controls transmission of an uplink shared channel (for example, PUSCH: Physical Uplink Shared Channel) based on the DCI (also referred to as UL grant or the like).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (e.g., NR), a study is underway to use a pathloss RS (e.g., PL-RS) used in pathloss estimation. For example, in a case of transmitting an uplink shared channel (e.g., PUSCH), a UE controls so that the pathloss RS is also transmitted.

In NR, a random access procedure is supported. In the random access procedure, when a UL transmission indication (e.g., UL grant) is included in a response signal (e.g., RAR) transmitted in response to a random access preamble (e.g., PRACH), the UE performs transmission of the PUSCH based on the UL grant. However, studies have not sufficiently been made how to control the transmission of the pathloss RS in such a case.

Thus, it is an object of the present disclosure to provide a terminal, a radio communication method, and a base station that can appropriately transmit a pathloss RS.

### Solution to Problem

A terminal according to an aspect of the present disclosure includes a transmitting section that transmits an uplink shared channel, based on a UL transmission indication included in a random access response, and a control section that controls, in a case of re-transmitting the uplink shared channel, transmission of a pathloss reference signal, based on at least one of a certain condition and information notified from a base station.

### Advantageous Effects of Invention

According to an aspect of the present disclosure, it is possible to appropriately transmit a pathloss RS.

### Brief Description of Drawings

[FIG. 1] FIGS. 1A and 1B are diagrams to show examples of a contention-based random access procedure;
[FIG. 2] FIG. 2 is a diagram to show an example of a contention-free random access procedure;
[FIG. 3] FIGS. 3A and 3B are diagrams to show an example of a random access procedure and an RAR notified using a MAC CE in the random access procedure, respectively;
[FIG. 4] FIGS. 4A and 4B are diagrams to show an example of a method according to a second aspect for notifying information related to a pathloss RS corresponding to a re-transmission PUSCH;
[FIG. 5] FIGS. 5A and 5B are diagrams to show another example of a method according to the second aspect for notifying the information related to the pathloss RS corresponding to the re-transmission PUSCH;
[FIG. 6] FIG. 6 is a diagram to show an example of reporting presence/absence of support using a PRACH resource according to a fourth aspect;
[FIG. 7] FIG. 7 is a diagram to show an example of a schematic structure of a radio communication system according to one embodiment; [FIG. 8] FIG. 8 is a diagram to show an example of a structure of a base station according to one embodiment;
[FIG. 9] FIG. 9 is a diagram to show an example of a structure of a user terminal according to one embodiment; and
[FIG. 10] FIG. 10 is a diagram to show an example of a hardware structure of the base station and the user terminal according to one embodiment.

### Description of Embodiments

### <Random Access Procedure>

In an existing LTE system (e.g., Rel. 15), a random access procedure for establishing UL synchronization is supported. The random access procedure includes a contention-based random access (also referred to as CBRA or the like) and a contention-free random access (also referred to as Non-CBRA, CFRA or the like).

In the contention-based random access (CBRA), a terminal (hereinafter also referred to as user terminal or UE) transmits a preamble randomly selected from among a plurality of preambles (also referred to as random access preamble, random access channel (Physical Random Access Channel (PRACH)), RACH preamble, or the like) determined for each cell. The contention-based random access is a UE-initiated random access procedure and can be used, for example, at initial access, start or restart of UL transmission, or the like.

On the other hand, in the contention-free random access (Non-CBRA, CFRA), a base station allocates a preamble uniquely to a UE through a downlink (DL) control channel (PDCCH)), and the UE transmits the preamble allocated by the base station. The contention-free random access is a network-initiated random access procedure and can be used, for example, at handover, start or restart of DL transmission (start or restart of UL transmission of DL re-transmission indication information), or the like.

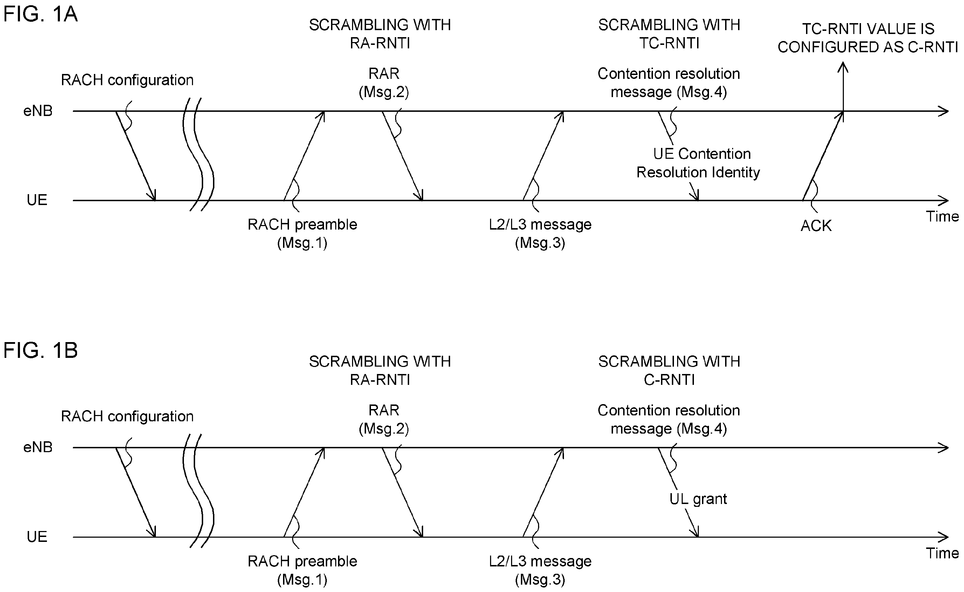

FIGS. 1A and 1B are diagrams to show examples of the contention-based random access. FIG. 1A shows an example of UE operations in a case that a UE in an idle state (e.g., IDLE UE) performs the CBRA, and FIG. 1B shows an example of UE operations in a case that a UE in a connected state (e.g., CONNECTED UE) performs the CBRA. The UE in the connected state may be an RRC-connected UE.

In FIGS. 1A and 1B, the UE receives, in advance, information (PRACH configuration information) indicating a random access channel (PRACH) configuration (PRACH configuration, RACH configuration) through system information (e.g., MIB (Mater Information Block) and/or SIB (System Information Block)) or higher layer signaling (e.g., RRC (Radio Resource Control) signaling).

The PRACH configuration information may indicate, for example, a plurality of preambles (for example, preamble formats) determined for each cell, a time resource (for example, system frame number or subframe number) and a frequency resource (for example, offset (prach-FrequencyOffset) indicating the start position of six resource blocks (PRBs: Physical Resource Blocks)) used for PRACH transmission.

As shown in FIG. 1A, in a case of transitioning from an idle (RRC_IDLE) state to an RRC connected (RRC_CONNECTED) state (e.g., in initial access), the UE randomly selects one of the plurality of preambles indicated by the PRACH configuration information and transmits the selected preamble on the PRACH (Message 1).

As shown in FIG. 1B, in a case that UL synchronization is not established even in the RRC connected state (e.g., at start or restart of UL transmission) or the like, the UE randomly selects one of the plurality of preambles indicated by the PRACH configuration information and transmits the selected preamble on the PRACH (Message 1).

When having detected the preamble, a base station transmits a random access response (RAR) in response to the preamble (Message 2). When having failed in RAR reception in a certain duration (RAR window) after transmission of the preamble, the UE transmits (re-transmits) the preamble again with increased PRACH transmission power. Note that transmission power increase at re-transmission is also called power ramping.

When having received the RAR, the UE establishes UL synchronization by adjusting a UL transmission timing based on timing advance (TA) included in the RAR. The UE transmits a higher-layer (L2/L3: Layer 2/Layer 3) control message using a UL resource (e.g., PUSCH resource) specified by a UL grant (e.g., RAR UL grant) included in the RAR (Message 3) .

The control message may include a UE identifier (UE-ID). The UE identifier may be, for example, a higher-layer UE-ID such as a C-RNTI (Cell-Radio Network Temporary Identifier) in a case of the RRC connected state or an S-TMSI (System Architecture Evolution-Temporary Mobile Subscriber Identity) in a case of the idle state.

The initial transmission (first transmission) of Message 3 in the CBRA in FIG. 1A may correspond to the PUSCH scheduled by the RAR UL grant. The re-transmission of Message 3 in the CBRA may correspond to the PUSCH scheduled by a certain DCI format (e.g., DCI format 0_0) subjected to the CRC scrambled with a TC-RNTI.

The base station transmits a contention-resolution message (e.g., PDCCH/PDSCH) in response to the higher-layer control message (Message 4). The contention-resolution message is transmitted based on the UE identifier destination included in the above-described control message.

The base station may transmit, to the UE in the idle state, a message CRC-scrambled with the TC-RNTI. In a case that the detection/decoding of the contention-resolution message 4 is successful and a contention identifier of Message 4 (e.g., UE Contention Resolution Identity) matches a CCCH SDU transmitted in Message 3, the UE may consider that the CBRA is successful (CBRA succeed/Contention Resolution successful). In this case, the UE may transmit, to the base station, acknowledge (ACK) in an HARQ (Hybrid Automatic Repeat reQuest) using the PUCCH. Accordingly, the UE in the idle state transitions to the RRC connected state. The value of the TC-RNTI may be configured as the C-RNTI for the UE.

On the other hand, the base station may transmit, to the UE in the RRC connected state, a message CRC-scrambled with the C-RNTI. In a case that the PDCCH corresponding to Message 4 is addressed by the C-RNTI, the CBRA may be considered to be successful (CBRA succeed/Contention Resolution successful). In a case that a new transmission is scheduled by Message 4 (e.g., UL grant), the UE may perform the UL transmission based on the UL grant.

In FIGS. 1A and 1B, the time point of transmitting Message 3 and the time point of re-transmitting Message 3 is before the contention resolution.

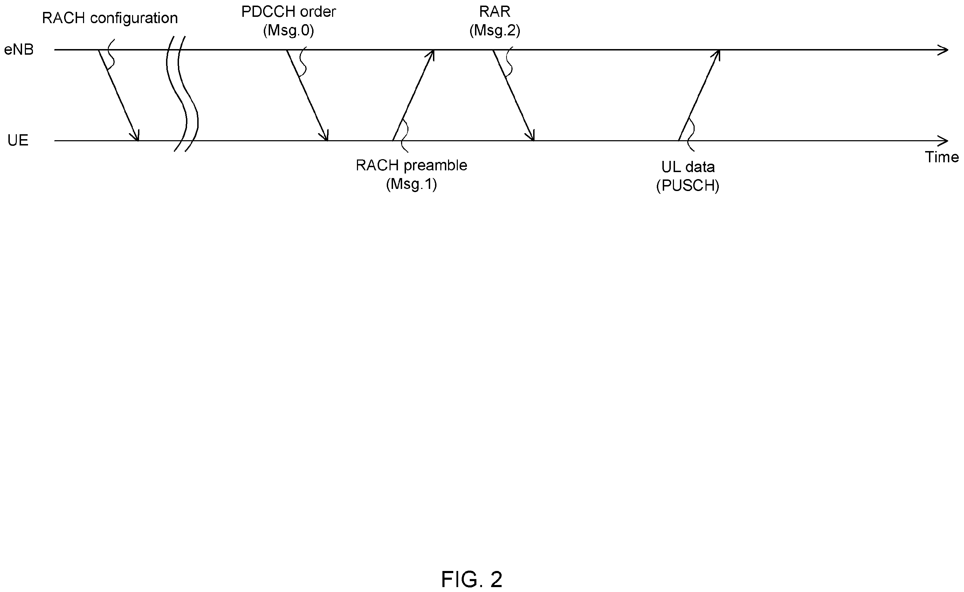

FIG. 2 is a diagram to show an example of the contention-free random access. FIG. 2 shows an example of UE operations in a case that the UE in the idle state (e.g., IDLE UE) performs the CFRA, and UE operations in a case that the UE in the connected state (e.g., CONNECTED UE) performs the CFRA. Note that, although here a common drawing is used to show both the UE in the idle state and the UE in the connected state, other operations may be applied.

In a case of the contention-free random access, the base station first transmits, to the UE, a physical downlink control channel (e.g., PDCCH-order) that indicates PRACH transmission (Message 0). The UE transmits a random access preamble (PRACH) at a timing indicated by the PDCCH (Message 1). When having detected the random access preamble, the base station transmits a random access response (RAR) that is response information in response to the random access preamble (Message 2).

The UE completes contention-free random access processing by reception of Message 2. When having failed in reception of Message 2, as in the contention-based random access, the UE transmits Message 1 again with increased PRACH transmission power. When having received Message 2, the UE may transmit UL data (e.g., PUSCH) based on a UL transmission indication (RAR UL grant) included in Message 2. The PUSCH may be referred to as a PUSCH scheduled by the RAR UL grant or a PUSCH corresponding to Message 3.

In other words, the initial transmission of the PUSCH corresponding to Message 3 in the CFRA may correspond to the PUSCH scheduled by the RAR UL grant. The re-transmission of the PUSCH corresponding to Message 3 in the CFRA may correspond to the PUSCH scheduled by a certain DCI format (e.g., DCI format 0_0 or DCI format 0_1) CRC-scrambled with the C-RNTI.

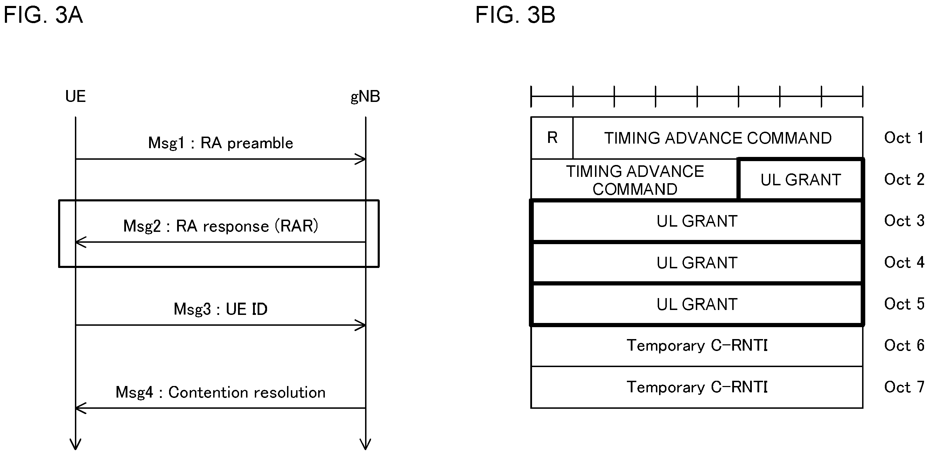

In each of the contention-based random access procedure and the contention-free random access procedure, Message 2 (e.g., random access response (RAR)) may include information (e.g., UL grant) that indicates UL transmission (see FIGS. 3A and 3B). FIG. 3A shows a random access procedure, and FIG. 3B shows an example of MAC control information corresponding to an RAR (MAC RAR). The UE controls transmission of an uplink shared channel (PUSCH), based on a timing advance command, a UL grant, or the like included in the RAR.

In the contention-based random access procedure, a PUSCH corresponding to Message 3 is transmitted based on the UL grant included in the RAR. In the contention-free random access procedure, a PUSCH scheduled based on the UL grant included in the RAR is transmitted. The PUSCH may include, for example, a power headroom or buffer status report.

### <Pathloss RS>

Pathloss RSs are used in pathloss calculation for the PUSCH/PUCCH/SRS. In Rel-15 NR, the maximum number of the pathloss reference RSs is four. In other words, the UE does not expect to store more than four pathloss reference RSs per serving cell at the same time for all PUSCH/PUCCH/SRS transmission.

The pathloss PL_{b, f, c}(q_{d}) [dB] in transmission power control for each of the PUSCH, the PUCCH, and the SRS is calculated by the UE using an index q_{d} of a reference signal for the downlink BWP (RS, pathloss reference RS (PathlossReferenceRS)) associated with an active UL BWP b of a carrier f of a serving cell c. In the present disclosure, the pathloss reference RS, RS for pathloss measurement, pathloss (PL)-RS, PLRS, index q_{d}, RS used in pathloss calculation, and RS resource used in pathloss calculation may be interchangeably interpreted. In the present disclosure, calculating, estimating, measuring, and tracking may be interchangeably interpreted.

It is under study that, in a case that the pathloss RS is updated by the MAC CE, whether to change the existing mechanism of higher layer filtered RSRP for the pathloss measurement.

In the case that the pathloss RS is updated by the MAC CE, the pathloss measurement based on an L1-RSRP may be applied. At a later timing when the MAC CE for updating the pathloss RS is available, the higher layer filtered RSRP may be used in the pathloss measurement, and the L1-RSRP may be used in the pathloss measurement before the application of the higher layer filtered RSRP. At the later timing when the MAC CE for updating the pathloss RS is available, the higher layer filtered RSRP may be used in the pathloss measurement, and before the timing, the higher layer filtered RSRP of the previous pathloss RS may be used. Similarly to the operations in Rel. 15, the higher layer filtered RSRP may be used in the pathloss measurement, and the UE may track all pathloss RS candidates configured by the RRC. The maximum number of the pathloss RSs that can be configured by the RRC may depend on the UE capability. When the maximum number of the pathloss RSs that can be configured by the RRC is X, X or less of the pathloss RS candidates may be configured by the RRC, and a pathloss RS may be selected by the MAC CE from among the configured pathloss RS candidates. The maximum number of the pathloss RSs that can be configured by the RRC may be four. eight, 16, 64, or the like.

In the present disclosure, the higher layer filtered RSRP, RSRP filtered, and layer 3 filtered RSRP may be interchangeably interpreted.

### <PL-RS of PUSCH of Message 3>

Incidentally, in Rel. 15, regarding control for transmitting (e.g., re-transmitting) the PL-RS of the PUSCH of Message 3, two interpretations as below may be considered. In other words, the UE/base station can be allowed to control transmission of the PUSCH/PS-RS by using either the two interpretations. Note that in the present disclosure, the PUSCH of Message 3 may be interpreted as the PUSCH scheduled by Message 2 (or RAR UL grant). In the present disclosure, the interpretation may be referred to as a certain rule, transmission rule, certain condition, or transmission condition.

### <<Interpretation 1»

In pathloss estimation, re-transmission of the PUSCH of Message 3 (e.g., Msg3 PUSCH reTX) uses the same reference signal (e.g., RS) as that in the initial transmission of the PUSCH of Message 3 (e.g., Msg3 PUSCH initial TX).

### <<Interpretation 2»

The re-transmission of the PUSCH of Message 3 (e.g., Msg3 PUSCH reTX) uses the same reference signal as that in the PUCCH transmission using a PUCCH resource with the minimum index or uses a reference signal corresponding to a value of a certain reference RS index being 0. The certain reference RS index may be a PUSCH pathloss reference RS index (e.g., PUSCH-PathlossReferenceRS-Id), or a reference signal corresponding to PUSCH-PathlossReferenceRS-Id = 0 may be used.

However, the time point of re-transmitting the PUSCH of Message 3 in the CBRA (for example, by the UE in the idle state) is before the contention resolution, and thus which UE has communication with the base station is unclear. Thus, in the interpretation 2 assuming a UE-specific RRC (e.g., ID #0 of PUSCH-PathlossReferenceRS-ID), implementation/control is possible in viewpoint of the terminal side, whereas the control may be difficult in viewpoint of the base station side.

As described above, in Rel. 15, when different interpretations are considered (or exist), how to control transmission (e.g., initial transmission/re-transmission) of the PUSCH/PL-RS is a problem in Rel. 16 or later versions or Rel. 17 or later versions.

Thus, the inventors of the present invention focused on that the two interpretations are possible in transmission control of the PUSCH/PL-RS in Rel. 15 (e.g., specification of Rel. 15), studied on the transmission control of the PUSCH/PL-RS in Rel. 17 or later versions (or Rel. 16 or later versions), and came up with the idea of an aspect of the present invention.

Embodiments according to the present disclosure will be described in detail with reference to the drawings as follows. Note that the aspects described below may be each applied alone or may be applied in combination of at least two.

In the present disclosure, "A/B" and "at least one of A and B" may be interchangeably interpreted. At least one of A and B may be interpreted as A and B. Similarly, in the present disclosure, "A/B/C" and "at least one of A, B, and C" may be interchangeably interpreted. At least one of A, B, and C may be interpreted as A and B, A and C, or B and C.

In the present disclosure, the higher layer signaling may be, for example, any one or combinations of RRC (Radio Resource Control) signaling, MAC (Medium Access Control) signaling, broadcast information, and the like.

For example, the MAC signaling may use MAC control elements (MAC CE), MAC PDUs (Protocol Data Units), and the like. The broadcast information may be, for example, a master information block (MIB), a system information block (SIB), minimum system information (Remaining Minimum System Information (RMSI)), other system information (OSI), or the like.

The aspects described below may be applied limitedly to the transmission control in the re-transmission of Message 3 or retransmission of the PUSCH (or the pathloss RS corresponding to the PUSCH) scheduled by the RAR UL grant. Alternatively, not limited to the retransmission of the PUSCH/pathloss RS, the aspects may also be applied to the transmission control in the initial transmission of Message 3 or initial transmission of the PUSCH (or the pathloss RS corresponding to the PUSCH) scheduled by the RAR UL grant.

The configuration described in the aspects below may be applied to operations after the RRC connection, regardless of the initial access operations before the RRC connection. The configuration described in the aspects below may be applied to either or both of the transmission or retransmission of the PUSCH/pathloss RS in the contention-based random access (CBRA) procedure and the transmission or re-transmission of the PUSCH/pathloss RS in the contention-free random access (CFRA) procedure.

Although the following description takes the pathloss RS as an example, the applicable RS is not limited to this. For example, other RSs corresponding to the PUSCH (e.g., other RSs to transmit in the PUSCH transmission) may also be applicable.

In the following description, "re-transmission" may mean only the first transmission of re-transmission after the initial transmission or may mean a plurality of re-transmissions (a plurality of re-transmissions of the first re-transmission transfer). The methods shown in FIG. 1 or 2 may be applied to re-transmission indication and the like of the PUSCH in the random access procedure.

### (First Aspect)

In a case that the re-transmission for the PUSCH scheduled by the UL grant (e.g., RAR UL grant) included in Message 2/RAR is performed, the transmission condition of the pathloss RS corresponding to the retransmission PUSCH may be defined clearly in the use.

For example, the transmission condition of the pathloss RS of the re-transmission PUSCH in a future communication system (e.g., Rel. 17) may be defined separately from the transmission condition of the pathloss RS of the re-transmission PUSCH in an existing communication system (e.g., Rel. 15). In this case, a UE in accordance with a specification of a first communication system (e.g., Rel. 15) may operate based on the specification of the first communication system, and a UE in accordance with a specification of a second communication system (e.g., Rel. 17) may operate based on the specification of the second communication system.

For example, as the transmission condition of the pathloss RS of the re-transmission PUSCH in the second communication system, which one of a plurality of transmission conditions (e.g., interpretation 1 or interpretation 2 as described above) for the pathloss RS of the retransmission PUSCH in the first communication system is to be applied may be clarified.

Thus, in a future radio communication system, a plurality of UEs can use a common condition in the transmission of the pathloss RS corresponding to the PUSCH (e.g., re-transmission PUSCH).

### (Second Aspect)

In a case that the re-transmission for the PUSCH scheduled by the UL grant included in Message 2/RAR is performed, information related to the pathloss RS corresponding to the re-transmission PUSCH may be determined based on information notified from the base station.

The information notified from the base station may be Message 2 (e.g., RAR) or broadcast information, for example. A case will be described below in which the transmission of the pathloss RS of the retransmission PUSCH is controlled based on Message 2.

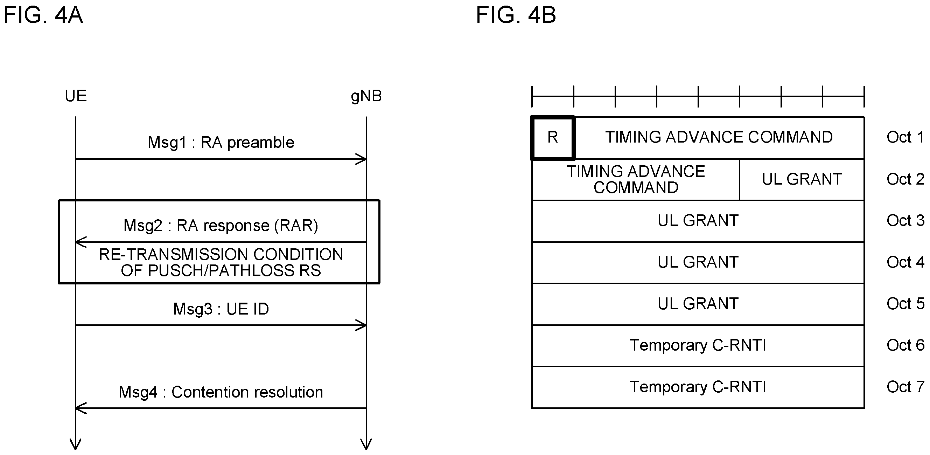

In a case of performing the re-transmission for the PUSCH scheduled by the RAR UL grant, the UE may control the transmission of the retransmission PUSCH/pathloss RS based on indication in Message 2/RAR (or certain information included in Message 2/RAR) (see FIG. 4A). The retransmission of the PUSCH may be scheduled by a certain DCI format (e.g., DCI format 0_0).

For example, the RAR may indicate the transmission condition (e.g., interpretation 1 or interpretation 2). In a case that the transmission condition is not indicated by the RAR (or the certain information is not included in the RAR), the UE may perform the same operation as that in an existing system (e.g., Rel. 15).

The indication by the RAR may be, for example, indication using one bit (e.g., on/off). In this case, either the transmission condition 1 (e.g., interpretation 1) or the transmission condition 2 (e.g., interpretation 2) may be defined in the specification.

Alternatively, the indication by the RAR may specify either the transmission condition 1 (e.g., interpretation 1) or the transmission condition 2 (e.g., interpretation 2). In this case, both of the interpretation 1 and interpretation 2 may be defined in the specification. The RAR may notify three states, that are "no notification", "transmission condition 1 (e.g., interpretation 1)", and "transmission condition 2 (e.g., interpretation 2)" (e.g., two bits).

The RAR may notify information to determine the pathloss RS. For example, the RAR may notify a synchronization signal block (SSB) index. In the SSB index, 1 to 64 (SSB index = {1 to 64}) may be notified using six bits, for example. Alternatively, the RAR may notify a resource number of the SSB/CSI-RS configured by the RRC. For the UE before having the RRC connection, the SSB index may be notified, and for the UE after having the RRC connection, the SSB index or the resource number of the SSB/CSI-RS may be notified.

For example, a certain field/certain bit included in the MAC CE corresponding to the RAR may be applied to the indication by the RAR. The configuration of the MAC CE corresponding to the RAR may use a configuration according to Rel. 15, or a new configuration may be defined. For example, as the certain field/certain bit, at least one of the following options 1 to 3 may be applied.

### <Option 1>

In the MAC CE corresponding to the RAR, the information related to the pathloss RS of the re-transmission PUSCH may be notified to the UE by using a reservation bit/reserve bit (R) (see FIG. 4B). FIG. 4B shows a case in which the information related to the pathloss RS of the retransmission PUSCH is notified to a specific UE by using the reservation bit (R) of the MAC CE corresponding to the RAR supported by Rel. 15.

The specific UE may determine, with reference to a field where the reservation bit is defined, the pathloss RS corresponding to the retransmission PUSCH in a case of re-transmitting the PUSCH scheduled by the RAR UL grant. For example, the reservation bit may specify either the transmission condition 1 (e.g., interpretation 1) or the transmission condition 2 (e.g., interpretation 2). Alternatively, the reservation bit may specify a specific pathloss RS.

The specific UE may be, for example, a UE that supports Rel. 17. UEs other than the specific UE (e.g., UEs in former versions than Rel. 17) are sufficient to be controlled not to perform the determination of the pathloss RS corresponding to the re-transmission PUSCH with reference to the field where the reservation bit is defined. For example, the other UEs except the specific UE may ignore the reservation bit.

In this case, the specific UE (e.g., UE in Rel. 17 or later versions) may determine the pathloss RS in accordance with the indication (here, reservation bit) from the base station, and the other UEs are sufficient to determine the pathloss RS based on an existing specification. As described above, the information related to the pathloss RS of the re-transmission PUSCH is notified to the specific UE by using the reservation bit of the MAC CE corresponding to the RAR, so that the indication can be made without affecting the UEs in an existing system (e.g., Rel. 15) even though the base station does not know the resource information of the UEs.

### <Option 2>

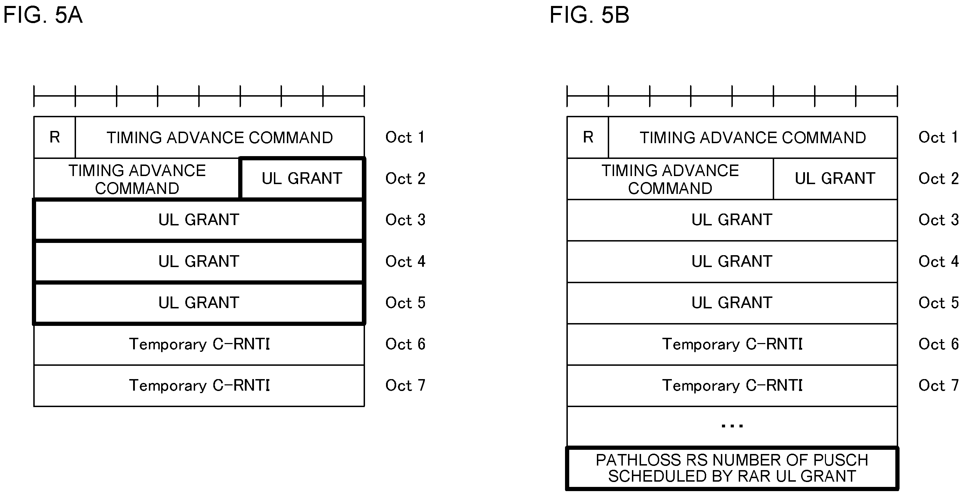

In the MAC CE corresponding to the RAR, the information related to the pathloss RS of the re-transmission PUSCH may be notified to the specific UE by using a field corresponding to the UL grant (see FIG. 5A).

The specific UE may determine, with reference to the field corresponding to the UL grant, the pathloss RS corresponding to the retransmission PUSCH in a case of re-transmitting the PUSCH scheduled by the RAR UL grant. For example, the field corresponding to the UL grant may specify either the transmission condition 1 (e.g., interpretation 1) or the transmission condition 2 (e.g., interpretation 2). Alternatively, the field corresponding to the UL grant may specify a specific pathloss RS.

The specific UE may be, for example, a UE that supports Rel. 17. UEs other than the specific UE (e.g., UEs in former versions than Rel. 17) are sufficient to be controlled not to perform the determination of the pathloss RS corresponding to the re-transmission PUSCH with reference to the field corresponding to the UL grant.

In this case, the specific UE (e.g., UE in Rel. 17 or later versions) may determine the pathloss RS in accordance with the indication (here, field for UL grant) from the base station, and other UEs are sufficient to determine the pathloss RS based on an existing specification.

### <Option 3>

In the MAC CE corresponding to the RAR, the information related to the pathloss RS of the re-transmission PUSCH may be notified to the specific UE by using a new field/additional field (see FIG. 5B). FIG. 5B shows a case in which the information related to the pathloss RS of the re-transmission PUSCH may be notified to the specific UE by using the new field added to the MAC CE corresponding to the RAR supported by Rel. 15.

The specific UE may determine, with reference to the new field, the pathloss RS corresponding to the re-transmission PUSCH in a case of re-transmitting the PUSCH scheduled by the RAR UL grant. For example, the new field may specify either the transmission condition 1 (e.g., interpretation 1) or the transmission condition 2 (e.g., interpretation 2). Alternatively, the new field may specify a specific pathloss RS.

The specific UE may be, for example, a UE that supports Rel. 17. UEs other than the specific UE (e.g., UEs in former versions than Rel. 17) are sufficient to be controlled not to perform the determination of the pathloss RS corresponding to the re-transmission PUSCH with reference to the new field. For example, other UEs except the specific UE may ignore the new field.

In this case, the specific UE (e.g., UE in Rel. 17 or later versions) may determine the pathloss RS in accordance with the indication (here, new field) from the base station, and other UEs are sufficient to determine the pathloss RS based on an existing specification.

### <Variation 1>

Although a case is described here in which the information related to the pathloss RS corresponding to the re-transmission PUSCH is notified by using the RAR, the present disclosure is not limited to this. For example, the information related to the pathloss RS of the retransmission PUSCH may be included in a MAC subheader (e.g., MAC subhedder) or the like and notified to the UE.

Alternatively, as Message 2 (e.g., RAR), a different RAR may be defined separately from the RAR of Rel. 15, and the information related to the pathloss RS may be notified by using the different RAR. The different RAR may be referred to as an extended RAR or enhanced RAR. In a case where the different RAR is defined, the option 2/option 3 described above may be applied.

In this case, the base station is sufficient to notify the information related to the pathloss RS only to the UE (e.g., specific UE) that controls the transmission of the pathloss RS based on the extended RAR. On the other hand, the base station is sufficient to transmit the existing RAR to other UEs (e.g., UEs that operate in Rel. 15/16). In such a case, the fourth aspect described below may be applied.

### <Variation 2>

In the above, a case is described in which the information related to the pathloss RS corresponding to the re-transmission PUSCH is notified to the UE based on the RAR, but the present disclosure is not limited to this. The information related to the pathloss RS may be included in a DL signal (e.g., downlink control information) indicating the retransmission of the PUSCH and notified to the UE.

### (Third Aspect)

In a case that the re-transmission for the PUSCH scheduled by the UL grant included in Message 2/RAR is performed, the information related to the pathloss RS corresponding to the re-transmission PUSCH may be determined based on higher layer signaling (e.g., RRC signaling).

In a case of performing the re-transmission for the PUSCH scheduled by the RAR UL grant, the UE may control the transmission of the retransmission PUSCH/pathloss RS based on the RRC signaling. The UE may be limited to a UE after having the RRC connection.

For example, the RRC signaling may indicate the transmission condition (e.g., interpretation 1 or interpretation 2). In a case that the transmission condition is not indicated by the RRC signaling, the UE may perform the same operation as that in an existing system (e.g., Rel. 15)

The indication by the RRC signaling may be, for example, indication using one bit (e.g., on/off). In this case, either the transmission condition 1 (e.g., interpretation 1) or the transmission condition 2 (e.g., interpretation 2) may be defined in the specification.

Alternatively, the indication by the RRC signaling may specify either the transmission condition 1 (e.g., interpretation 1) or the transmission condition 2 (e.g., interpretation 2). In this case, both of the interpretation 1 and interpretation 2 may be defined in the specification. The RRC signaling may notify three states, that are "no notification", "transmission condition 1 (e.g., interpretation 1)", and "transmission condition 2 (e.g., interpretation 2)" (e.g., two bits).

The RRC signaling may notify information to determine the pathloss RS. For example, the RRC signaling may notify a synchronization signal block (SSB) index. In the SSB index, 1 to 64 (SSB index = {1 to 64}) may be notified using six bits, for example. Alternatively, the RRC signaling may notify a resource number of the SSB/CSI-RS configured by the RRC.

### (Fourth Aspect)

In a case that a radio communication system supports the second aspect/third aspect, the UE may report whether the UE supports the configuration of controlling the transmission of the pathloss RS corresponding to the re-transmission PUSCH based on the information notified from the base station.

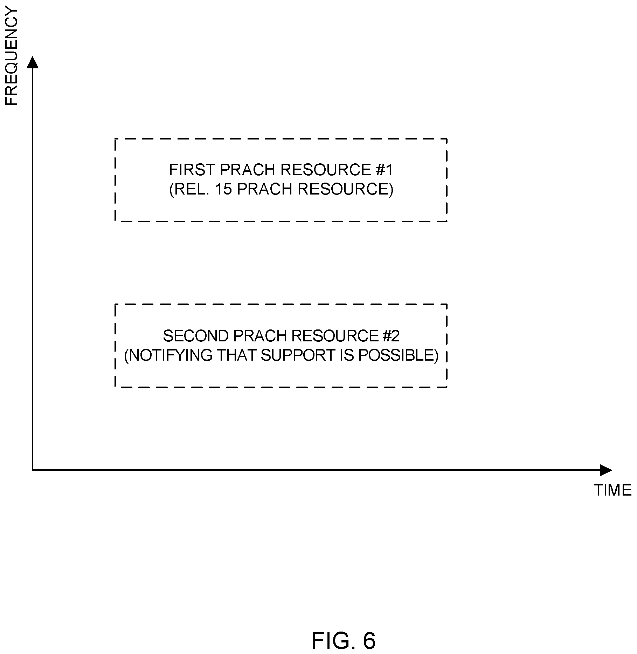

The UE may report the presence or absence of the support by using a resource/sequence/preamble corresponding to the PRACH, for example. FIG. 6 shows an example of a case in which the presence or absence of the support for the configuration described in the second aspect/third aspect is reported, based on the PARCH resource selected by the UE (or based on which PRACH resource is selected by the UE).

For example, the UE controlling the transmission of the pathloss RS corresponding to the re-transmission PUSCH based on Rel. 15 may transmit the PRACH by using a first PRACH resource #1. The base station need not notify the information related to the pathloss RS corresponding to the re-transmission PUSCH to the UE that has performed the PRACH transmission by using the first PRACH resource #1.

The UE that supports controlling of the transmission of the pathloss RS corresponding to the re-transmission PUSCH by using the second aspect/third aspect may transmit the PRACH by using a second PRACH resource #2. The base station may be controlled to notify the information related to the pathloss RS corresponding to the retransmission PUSCH to the UE that has performed the PRACH transmission by using the second PRACH resource #2.

The second PRACH resource #2 may be a resource calculated from a PRACH resource in Rel. 15 (e.g., first PRACH resource #1) by a certain transform formula or the like.

In a case that, after performing the transmission by using the second PRACH resource #2, the UE is unable to receive Message 2/RAR within a range of a certain duration, the UE may transmit (e.g., retransmit) the PRACH by using the first PRACH resource #1. In power ramping of the PRACH, the UE may switch the resource to use from the second PRACH resource #2 to the first PRACH resource #1. Thus, in a case that there are only base stations (e.g., gNBs in Rel. 15) unable to receive the second PRACH resource #2 around the UE, the communication with the base station can be performed by switching to the first PRACH resource #1.

### (UE Capability Information)

In the first to fourth aspects described above, a UE capability as below may be configured. Note that the UE capability as below may be interpreted as a "parameter" (e.g., higher layer parameter) configured for the UE from the network (e.g., base station).

The UE capability information (e.g., UE capability signaling) related to the support for the pathloss RS corresponding to the PUSCH scheduled by the RAR UL grant may be defined.

For example, the transmission condition of the pathloss RS corresponding to the re-transmission PUSCH (e.g., either one of the interpretation 1 or interpretation 2) may be defined clearly in the use. In this case, the present embodiment may be applied limitedly to the UE that has reported the support for the UE capability information.

Alternatively, the UE may report, as the UE capability information, that the UE supports the interpretation 1, interpretation 2, or both from among the transmission condition (e.g., interpretation 1 and interpretation 2) of the pathloss RS corresponding to the re-transmission PUSCH.

Certain higher layer signaling that performs configuration of the pathloss RS corresponding to the PUSCH scheduled by the RAR UL grant may be defined/supported.

The present embodiment may be applied limitedly to the UE configured/indicated with the certain higher layer signaling.

The base station may indicate a condition/parameter (e.g., interpretation 1 or interpretation 2) to be applied to the transmission of the pathloss RS corresponding to the PUSCH by using the higher layer signaling.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

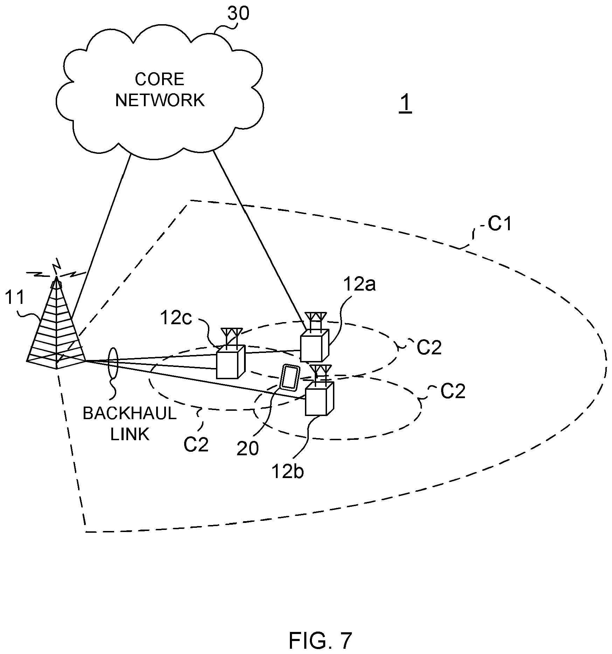

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

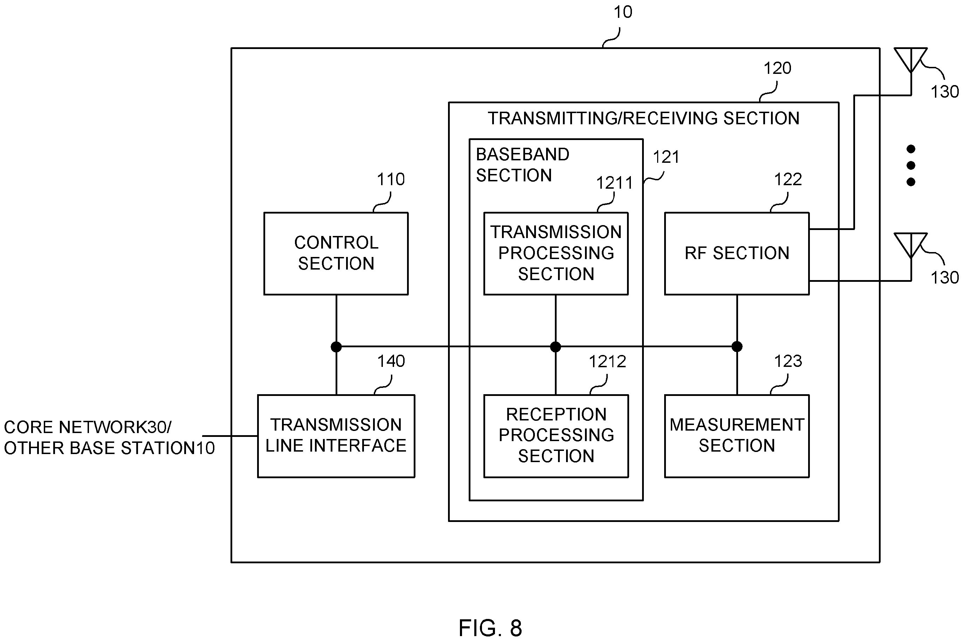

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit the UL grant (e.g., RAR UL grant) that indicates transmission of the uplink shared channel. In a case that the uplink shared channel is re-transmitted, the transmitting/receiving section 120 may receive a pathloss reference signal whose transmission is controlled based on at least one of a certain condition and information notified to the terminal.

The control section 110 may control so that transmission of the uplink shared channel is indicated to the terminal by using a UL transmission indication included in a random access response.

### (User Terminal)

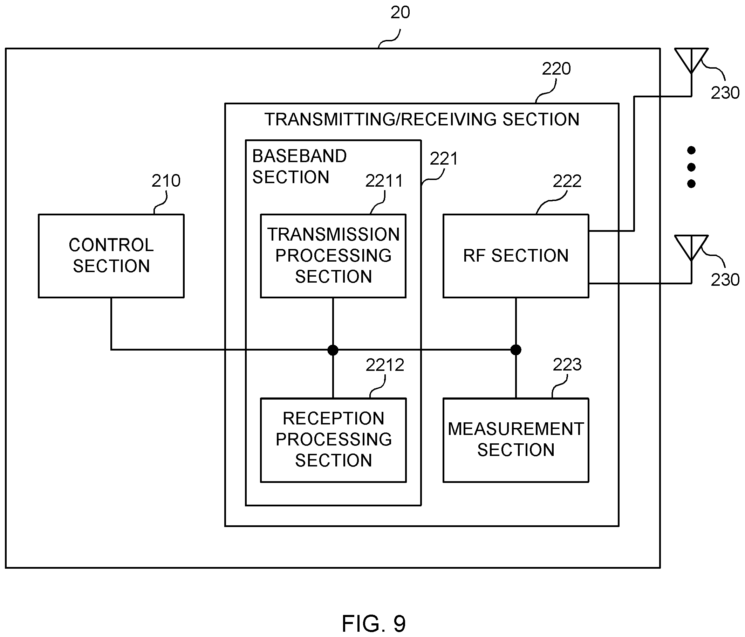

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may transmit the uplink shared channel, based on the UL transmission indication included in the random access response.

In a case of re-transmitting the uplink shared channel, the control section 210 may control transmission of the pathloss reference signal, based on at least one of a certain condition and the information notified from the base station.

The certain condition may be defined separately in a communication system corresponding to Rel. 15 and a communication system corresponding to Rel. 17.

The information notified from the base station may be included in the random access response. Alternatively, the information notified from the base station may be included in the higher layer signaling.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (separate apparatus),for example, via wire, wireless, or the like, and using these plurality of pieces of apparatus (these plurality of apparatus). The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, functional block (components) to implement a function of transmission may be referred to as a "transmitting section (transmitting unit)," a "transmitter," and the like. The method for implementing each component is not particularly limited as described above.

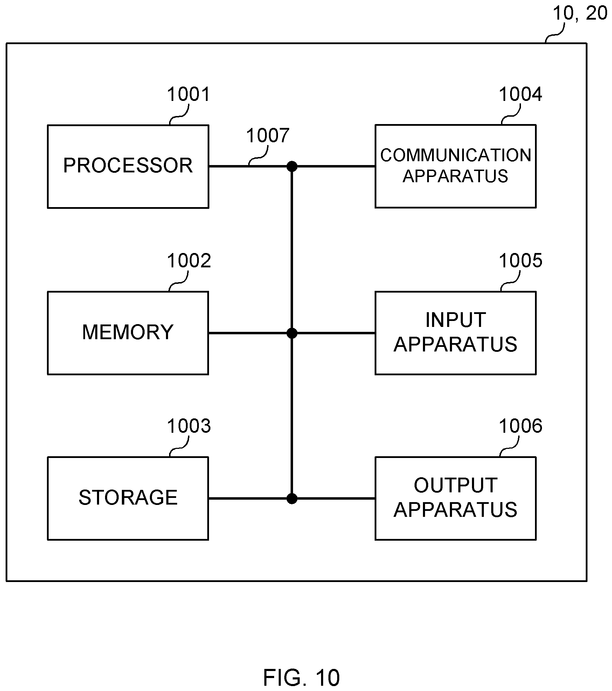

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus (between apparatus).

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware (these hardware).

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "X holds") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (e.g., "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The "maximum transmission power" described in the present disclosure may mean the maximum value of transmission power, the nominal maximum transmission power (nominal UE maximum transmit power), or the rated maximum transmission power (rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2021-014610 filed on February 1, 2021, the contents of which are incorporated herein in its entirety.

## Claims

1. A terminal comprising:
a transmitting section that transmits an uplink shared channel, based on a UL transmission indication included in a random access response; and
a control section that controls, in a case of re-transmitting the uplink shared channel, transmission of a pathloss reference signal, based on at least one of a certain condition and information notified from a base station.

2. The terminal according to claim 1, wherein
the certain condition is defined separately in a communication system corresponding to Rel. 15 and a communication system corresponding to Rel. 17.

3. The terminal according to claim 1, wherein
the information notified from the base station is included in the random access response.

4. The terminal according to claim 1, wherein
the information notified from the base station is included in higher layer signaling.

5. A radio communication method comprising:
transmitting an uplink shared channel, based on a UL transmission indication included in a random access response; and
in a case of re-transmitting the uplink shared channel, controlling transmission of a pathloss reference signal, based on at least one of a certain condition and information notified from a base station.

6. A base station comprising:
a control section that indicates, to a terminal, transmission of an uplink shared channel using a UL transmission indication included in a random access response; and
a receiving section that receives, in a case that the uplink shared channel is re-transmitted, a pathloss reference signal whose transmission is controlled based on at least one of a certain condition and information notified to the terminal.
